**Europäisches Patentamt**

**European Patent Office**

**Office européen des brevets**

(19)

(11) Veröffentlichungsnummer: **0 300 998**

**B1**

(12) **EUROPÄISCHE PATENTSCHRIFT**

(45) Veröffentlichungstag der Patentschrift: **13.06.90**

(51) Int. Cl.⁵: **G 09 B 5/06, G 09 B 19/24**

(21) Anmeldenummer: **87901354.8**

(22) Anmeldetag: **27.02.87**

(86) Internationale Anmeldenummer:
**PCT/DE87/00069**

(87) Internationale Veröffentlichungsnummer:
**WO 87/06045 08.10.87 Gazette 87/22**

(54) BETRIEBSSTEUERSYSTEM UND -VERFAHREN.

(30) Priorität: **24.03.86 DE 3609927**

(43) Veröffentlichungstag der Anmeldung:
**01.02.89 Patentblatt 89/05**

(45) Bekanntmachung des Hinweises auf die
Patenterteilung:
**13.06.90 Patentblatt 90/24**

(84) Benannte Vertragsstaaten:
**AT BE CH DE FR GB IT LI**

(56) Entgegenhaltungen:
**EP-A-0 004 367
EP-A-0 044 642
EP-A-0 178 535
GB-A-2 127 645**

(73) Patentinhaber: **INDULOG Gesellschaft für
Industrielogistik mbH
Bismarckstrasse 67
D-4100 Duisburg 1 (DE)**

(72) Erfinder: **HERING, Norbert
Laupendahlweg 1
D-4030 Ratingen 6 (DE)**

(74) Vertreter: **Becker, Thomas, Dr., Dipl.-Ing. et al
Patentanwälte Becker & Müller
Eisenhüttenstrasse 2
D-4030 Ratingen 1 (DE)**

Courier Press, Leamington Spa, England.

**Beschreibung**

Die Erfindung betrtifft ein Verfahren zum Betrieb einer Anlage.

Aus der EP—A—0 044 642 ist ein computergesteuertes interaktives System zum Erlernen von Maßnahmen zur ersten Hilfe bekannt. Dieses System weist ein Peripheriegerät mit zumindest einem Sensor auf, um ein Signal zu erzeugen, welches eine Tätigkeit repräsentiert, die manuell von einer Person durchgeführt werden soll. Weiterhin ist bei dem bekannten interaktiven System ein erstes Speichergerät zum Speichern einer Folge von Signalen, die Anweisungen repräsentieren, die sich auf die korrekte Ausführung der Tätigkeit beziehen, sowie eine erste Anzeigeeinrichtung vorgesehen, die an das erste Speichergerät angeschlossen ist, und mit welcher die Anweisungen dargestellt werden können. Darüber hinaus weist das bekannte interaktive System ein zweites Speichergerät zum Speichern von Video- oder Audiosignale auf, die bildliche beziehungsweise lautliche Darstellungen der korrekten Ausführung der Tätigkeit repräsentieren. Zur Darstellung der Bild-Darstellungen ist ein zweites Anzeigegerät vorgeshen. An die voranstehend genannten Geräte beziehungsweise Einrichtungen ist ein Computer angeschlossen, der bewirkt, daß Anweiśungssignale im ersten Speichergerät auf der ersten Anzeigeeinrichtung angezeigt werden. Dies soll dazu dienen, daß eine Person diese Anweisungen lernen kann. Der Computer dient weiterhin zum Empfang der Signale von dem Peripheriegerät und zum Nachweis, ob die Tätigkeit in korrekter oder in unkorrekter Weise durch die Person durchgeführt wurde, worauf entsprechende gespeicherte Videosignale durch die zweite Anzeigeeinrichtung angezeigt und zugehörige Audiosignale wiedergegeben werden können, um bei einer nicht korrekten Ausführung de Tätigkeit die korrekte Tätigkeit zu erlaüutern.

Das bekannte interaktive System dient daher zum Erlernen von Tätigkeiten, und zwar insbesondere zum Erlernen der Herzmassage. Hierzu gibt das bekannte System zunächst Anweisungen, die auf der ersten Anzeigeeinrichtung angezeigt werden und die eine Person, die die für die Herzmassage erforderlichen Handgriffe erlernen soll, ablesen und möglichst lernen und verstehen soll. Diese erlernte Tätigkeit soll dann von der Person manuell an dem Peripheriegerät durchgeführt werden, und der Sensor stellt fest, ob die Tätigkeit korrekt durchgeführt wurde, also etwa der richtige Punkt für eine Einleitung einer Herzmassage an dem Peripheriegerät gefunden wurde oder nicht. In Abhängigkeit von der Leistung der Bedienungsperson wird dann entweder, bei unkorrekter Ausführung, der Vorgang noch eingehender erläutert oder etwa der vorhergehende Anweisungsschrift wiederholt, oder as wird bei korrekter Ausführung der nächste Lernschritt auf der Anzeigeeinrichtung angezeigt.

Zur Erreichung dieses Zwecks sind bei dem bekannten interaktiven System ein Peripheriegerät erforderlich, zumindest ein Sensor, ein erstes Speichergerät, eine erste Anzeigeeinrichtung, ein zweites Speichergerat, ein zweites Anzeigegerät sowie ein Computer.

Eine Person die eine Tätigkeit wie etwa Herzmassage lernen soll, kann die Arbeitsweise des interaktiven Systems nicht beeinflussen. Das bekannte interaktive System ist nicht dazu gedacht oder geeignet, mit dem interaktiven System eine konkrete Herzmassage en einem bestimmten Patienten durchzuführen sondern nur zum Elernen einer entsprechenden Tätigkeit.

Bei technischen Anlagen bestehen jedoch andere Probleme. In diesem Zusammenhang soll unter Anlage jedes komplexere technische Gerät verstanden werden, zu dessen Gebrauch umfangreichere Anleitungen eforderlich sind, als Geräte, Maschinen, Bearbeitungsvorrichtungen bis zu Großanlagen des Anlagenbaus. Zum Betrieb einer derartigen Anlage gehört die Durchführung der bestimmungsgemäßen Funktion, aber auch weitere Vorgänge wie Wartungsarbeiten, Instandsetzungen bis zu Stör- und Notfällen zählen hierzu.

Im allgemeinen ist zum Betrieb solcher Anlagen zunächst einmal eine eingehende Schulung des die Anlage bedienenden Personals notwendig. Im folgenden soll beispielhaft, um die Schilderung der Erfindung zu vereinfachen, anhand einer Werkzeugmaschine als "Anlage" geschildert werden, welche Vorgänge im einzelnen ablaufen. Zunächst einmal wird die Werkzeugsmaschine geliefert und muß nach Instruktionen des Herstellers aufgestellt und in Betrieb genommen werden. Üblicherweise kommt hierzu ein Beauftragter der Herstellerfirma der Werkzeugmaschine zum Aufstellungsort und weist das dort beschäftigte Bedienungspersonal ein. Hierzu kann man sich im allgemeinen sehr umfangreicher Handbücher, sogenannter "Manuals", oder anderer Aufzeichnungsmedien für eine komprimierte Darstellung, beispielsweise Mikrofiches, gekoppelt mit einem zugehörigen Mikrofiche-Lesegerät, bedienen. Als nächstes müssen die Betriebsabläufe für die bestimmungsgemäße Funktion, im Fall der angeführten Werkzeugmaschine also der Gebrauch dieser Maschine zur Herstellung von Werkzeugen, erläutert werden. Dazu gehört insbesondere eine ausführliche Schilderung ausgewählteer Bearbeitungsabläufe anhand typischer Anwendungsfälle. Als nächstes müssen Wartungs- und Instandsetzungsarbeiten, die gegebenenfalls, sehr aufwendig sind und den Einsatz spezieller Werkzeuge und Hilfsmittel oder nur vom Hersteller beziehbare Ersatzteile erfordern, verdeutlicht werden. Das Bedienungspersonal muß weiterhin lernen, wie es sich im Falle von Störungen, im Extremfall sogar bei echten Notfällen wie etwa einem Brand, verhalten soll.

Nach einer gewissen Einarbeitungszeit des Bedienungspersonals reist der Beauftragte des Herstellerwerks wieder ab, und das Bedienungspersonal ist auf sich gestellt.

Aufgrund der hohen Informationsdichte sind häufig zahlreiche Informationen schnell wieder vergessen, weil sie momentan nicht gebraucht werden insbesondere solche für seltenere Stör- oder Notfälle.

Treten daher außergewöhnliche Betriebsbedingungen auf, die etwa den Ersatz eines Spezialteiles an der Werkzeugmaschine erforderlich machen, so kann das übliche Bedienungspersonal darin überfordert sein, den Austausch dieses Ersatzeiles vorzunehmen. Nunmehr muß wieder ein Beauftragter des Herstellerwerks anreisen, um das benötigte Spezialteil in die Werkzeugmaschine einzubauen. Dabei stehen häufig die Kosten für den Beauftragten der Herstellerfirma, insbesondere Reisekosten, Kosten der Unterbringung und Abwesenheit von seinem üblichen Einsatzort, in keinem Verhältnis zu den Kosten des Ersatzteiles. Dies kann insbesondere bei größeren Geräten, bei denen häufig Wartungen und Instandsetzungen durchzuführen sind, dazu führen, daß ein Hersteller derartiger Anlagen an weiter entfernten Orten Wettbewerbsnachteile hinnehmen muß, da sich die Abnehmer solcher Anlagen eher Firmen bedienen werden, die nicht allzuweit entfernt ansässig sind, um die Kosten für Instandhaltung und Wartung zur verringern.

Der Erfindung liegt daher die Aufgabe zugrunde, ein Verfahren zum Betrieb einer Anlage zur Verfügung zu stellen, bei welchem die voranstehend genannten Betriebsabläufe derart vereinfacht sind, daß das Bedienungspersonal in die Lage versetzt wird, sämtliche auftretenden Betriebsabläufe, sei es der bestimmungsgemäße Gebrauch oder Vörgange wie Wartung, Reparatur und Instandhaltung oder Not- und/oder Stöfalle, in den Griff zu bekommen.

Die Erfindung wird gelöst durch ein Verfahren zum Betrieb einer Anlage über eine Einrichtung mit einem eine programmierbare elektronische Schaltungseinheit umfassenden Steuergerät, einer Speichervorrichtung, in welcher visuelle Informationen und Betriebsparameter gespeichert sind, und einem Darstellungsgerät zur Darstellung der visuellen Information und zugehöriger Betriebsparameter, mit folgenden Schritten: Speicherung von Betriebsabläufen der Anlage als visuelle Information, Versehen der Betriebsparameter mit Marken, welche eine Zuordnung des/der jeweiligen Betriebsparameter(s) zu dem Betriebsablauf an der Stelle des Betriebsablaufs (der Betriebsabläufe) der Anlage gestatten, an welcher der jeweilige Betriebsparameter auftaucht, Verknüpfung der Betriebsparameter mit dem Betriebsablauf in dem Steuergerät, Auslesen der Betriebsparameter und des Betriebsablaufs von dem Speichermedium, und wahlweise Darstellung de Betriebsparameter und des Betriebsablaufs aufgrund eines Benutzereingriffs auf dem Darstellungsgerät.

Es wird auch auf das Dokument EP—A—0 004 367 verwiesen, dessen Gegenstand die visuelle Darstellung von Betriebsparametern beim Lichtbogenschweißen emrmöglicht.

Beispielhaft für Betriebsparameter im Sinne der Erfindung seien hier anhand der Schmierung einer Werkzeugmaschine Schmierintervalle, an unterschiedlichen Stellen der Maschine vorgeschriebene unterschiedliche Schmiernippel und zum Austausch dieser Schmiernippel benötigte Werkzeuge, insbesondere Spezialwerkzeuge genannt. Im Rahmen dieses Biespiels ist ein typischer Betriebsablauf die Schmierung der Werkzeugmaschine in bestimmten Wartungsintervallen, etwa täglich, wöchentlich oder nach Ablauf einer vorgegebenen Betriebstundenzahl. Der Betriebsablauf ist derart in der Speicherrvorrichtung gespeichert, daß sämtliche zur Schmierung der gesamten Maschine notwendigen Operationen und Handgriffe auf dem Darstellungsgerät gezeigt werden, etwa so wie ein Lehrfilm. Auf dem Darstellungsgerät, beispielsweise einem Video-Monitor, sieht die Bedienungsperson daher bezüglich des beispielhaften Betriebsablaufes "Schmierung" Ansichten der Maschine mit den unterschiedlichen Schmierstellen, und es wird im einzelnen gezeigt, in welcher Reihenfolge die Schmierstellen versorgt werden, welche Maschinenteile hierbei gegebenenfalls entfernt werden müssen, wie dies im einzelnen zu bewerkstelligen ist, welche Werkzeuge die in dem Film gezeigte vorführende Person hierbei benutzt usw. Hierbei kann die Darstellung des Betriebsablaufes zu jedem geeigneten Zeitpunkt unterbrochen werden, um jeweils zugehörige Betriebsparameter festzustellen. Ist in dem Lehrfilm daher etwa ein bestimmter Schmiernippel gezeigt, so kann die Darstellung des Vorgangs des Auffindens dieses bestimmten Schmiernippels an dieser Stelle unterbrochen werden, um als zugehörige Betriebsparameter die Bezeichnung dieses Schmiernippels in der Schmiernippel-Ersatzteilliste abzurufen. Ein weiterer zugehöriger Betriebsparameter kann das speziell für diesen bestimmten Schmiernippel erforderliche Schmiermittel, etwa ein Fett mit ganz bestimmten Eigenschaften, sein.

Weiterhin kann, wenn etwa dieser bestimmte Schiernippel defekft ist, ein weiterer Betriebsablauf zugeordnet und auf dem Darstellungsgerät gezeigt werden, insbesondere die zweckmäßigste Vorgehensweise zum Anstausch dieses defekten Schmiernippels. Bie diesem Reparaturvorgang kann die Darstellung des Betriebsablaufes wiederum unterbrochen werden, um beispielsweise zugehörige andere Betriebsparameter, etwa zum Austausch des Schmiernippels benötigte Spezielwerkzeuge, zu ermitteln und ebenfalls auf dem Darstellungsgerät anhand ihrer Bezeichnung oder zur Erläuterung ihrer Funktion sogar ihrer Form bildlich sichtbar zu machen.

Schon dieses einfache Beispiel macht die Vorteile des erfindungsgemäßen Verfahrens zum Betrieb einer Anlage deutlich. In jedem Moment steht der Bedienungsperson eine umfassende Information, die dem jeweiligen Einzelfall angepaßt is, zur Verfügung. Hierbei kann mit Hilfe des Steuergerätes an dan jeweiligen Einzelfall angepaßt ausgewählt werden, was bei diesem Einzelfall wichtig oder von Bedeutung ist. Abhängig von der Schwierigkeit oder möglicherweise auftretenden Gefahren bei bestimmten Betriebsvörgangen, zum Beispiel der Raparatur spannungsführender Teile, kann mit Hilfe des Steuergerätes hierbei erreicht werden, daß bestimmte Parameter oder Angaben zwangsweise an bestimmten Stellen nach Art eines Films ablaufenden Betriebsablaufes auf dem Darstellungsgerät gezeigt werden, etwa eine deutliche Warnung, an dieser Stelle bestimmte Arbeiten erst dann vorzunehmen, wenn ein bestimmter Anlagenteil stromlos gemacht worden ist. Das Steuergerät ermöglicht es weiterhin, für Benutzerkreise unterschiedliche Qualifikationen entsprechend unterschiedliche Betriebsparameter einzublenden, die vorzugsweise für weniger qualifiziertes Personal, ewa Hilfspersonal, nicht abschaltbar sind.

Bei einer vorteilhaften Ausgestaltung des erfindungsgemäßen Verfahrens ist der Betriebsablauf gegenüber der Echtzeit verzögert oder beschleunigt ablaufend darstellbar. Besteht der dargestellte Betriebsablauf beispielsweise in der realistischen Darstellung eines bestimmten Reparaturvorgangs, so können besonders schwierige Schritte in diesem Vorgang in einem zeitlupenhähnlichen Verfahren verzögert werden, um so das Verständnis zu erleichtern. Dieser Vorteil wird gemäß einer weiteren bevorzugten Ausgesstaltung der Erfindung dadurch vergrößert, daß der Betriebslauf für bestimmte Betriebsphasen dieses Ablaufs als Standbild darstellbar ist. Die gewünschte Betriebsphase bleibt dann solange sozusagen "eingefroren" auf dem Darstellungsgerät, beispielsweise einem Video-Monitor, bis die Bedienungsperson dies Betriebsphase erfolgreich erledigt hat. Durch Wiederholung eines Abschnitts des Betriebsablaufs kann, falls die Bedienungsperson inzwischen den Zusammenhang vergessen hat, der Zusammenhan wieder ins Gedächtnis zurückgerufen werden.

Es ist weiterhin von besonderem Vorteil, wenn die Darstellung in Abhängigkeit von aktuellen Betriebsparametern steuerbar ist, wozu vorzugsweise bereits geschilderte Sensorglieder an der Anlage dienen können. Est is aber beispielsweise auch möglich, daß eine Bedienungsperson nach Blick auf bestimmte Anzeigegeräte durch Eingabe über des Steuergerät festlegen kann, welcher Betriebsablauf und gegebenenfalls welche zugehörigen Betriebsparameter angezeigt werden. Auch hierbei kann, je nach Qualifikationsgrad der Bedienungsperson, eine eher zwangsweise geführte oder frei wählbare Steuerung erfolgen.

Insbesondere für Not- und Störfälle sollte vorteilhafterweise den aktuellen Betriebsparametern eine Hierarchie zugeordnet sein, welche die Reihenfolge und/oder die Art der Darstellung festlegt. Es wäre beispielsweise bei entstehender Brandgefahr infolge von Überhitzung eines sich drehenden Maschinenteils nicht sinnvoll, in diesem Moment die Addresse des Herstellerwerkes einzublenden, bei welchem Ersatzteile bestellt werden müssen, sondern in einem derartigen Störfall müssen zunächst Maßnahmen zur Gefahrenabwehr und Vorbeugung angezeigt werden, um dem Bedienungspersonal eine schnelle Reaktion zu ermöglichen. Gerade in solchen Fällen kann es vorteilhaft sein, Maßnahmen zur Gefahrenabwehr zwangsgesteuert durch das Steuergerät ablaufen zu lassen, das über Betätigungsglieder auf die gefährdete Anlage einwirkt und so insbesondere wenig geschultem Bedienungspersonal die Schwierigkeit der Entscheidungsfindung bei einem häufig komplexen Vorgang abnimmt.

Di Festlegung der Hierarchie sollte vorzugsweise änderbar sein, entweder aufgrund aktueller Betriebsparameter, welche beispielsweise durch Sensorglieder dem Steuergeräg zugeführt werden, oder aber durch externe Eingriffe in das Steuergerät, etwa wei bereits geschildert durch Geräte, welche einem mehr oder weniger begrenzten oder unbegrenzten Zugriff gestatten, also entsprechend eingebranntge EPROMS.

In diesem Zusammenhang können vorteilhafterweise Teile von Betriebsabläufen und/oder Betriebsparameterbereichen zusätzliche Markierungen aufweisen oder diese Markierungen können ihnen zuweisbar sein, die das Auslessen der derart markierten Betriebsabläufe und/oder Betriebsparameter verhindern. So kann zum Beispiel sichergestellt werden, daß auf dem Speichermedium gespeicherte Service-Informationen nicht an das Publikum gelangen, welchem mit Hilfe dieses Speichermediums, etwa anläßlich einer Messepräsentation, vorteilhafte Eigenschaften einer derartigen Anlage anhand realistischer Betriebsabläufe, die auf einem Monitor sichtbar werden, dargestellt werden sollen. Selbstverständliche muß es aber einem wenn auch begrenzten Benutzerkreis ermöglicht werden, sämtliche Betriebsabläufe und sämtliche Betriebsparameter, welche auf einem bestimmten Speichermedium gespeichert sind, abzurufen und auf dem Darstellungsgerät darzustellen, und hierzu schlägt eine vorteilhafte weitere Ausführungsform des erfindungsgemäßen Verfahrens vor, daß die zusätzlichen Markierungen von privilegierten Benutzern übersteuerbar sind.

Das erfindungsgemäße Verfahren zeichnet sich insbesondere durch seine Universalität aus. Einzelne Daten oder Kombinationen von Daten können einzeln aufgerufen und wieder abgelegt werden als auch einzeln aufgerufen, mit anderen Daten kombiniert und in auswählbaren Zusammenstellungen abgelegt werden. Das erfindungsgemäße Verfahren ist insbesondere an praktisch sämtlichen technischen Anlagen und Geräten zu verwirklichen und ermöglicht die Steuerung des Betriebs sowie zahlreiches weitere Vorgänge; so lassen sich etwa auch Verkaufschilfen, Messepräsentationen und ähnliches verwirklichen. Anhand eines zeichnerisch dargestellten Ausführungsbeispiels sollen in einem begrenzten Rahmen weitere Vorteile und Merkmale der Erfindung verdeutlicht werden.

Es zeigen:

Fig. 1 ein nach dem erfindungsgemäßen Verfahren arbeitendes Betriebssteuersystem mit Einzelheiten gespeicherter Betriebsabläufe, gespeicherter Betriebsparameter und beispielhaften Verwendungszwecken; und

Fig. 2 ein Beispiel für die Datenorganisation und Vernetzung der Vernetzung der Daten bei der Darstellung auf einem Monitor.

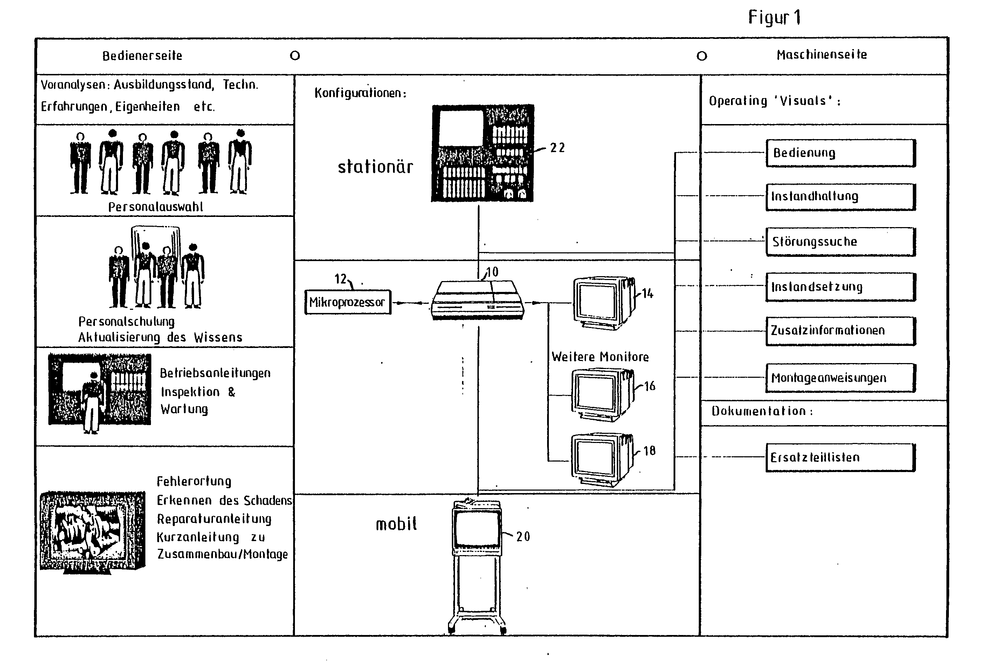

Im Zentrum der Figur 1 ist ein Bildplattnspieler 10 dargestellt, welcher ein optisches Nur-Lese-Speichermedium,

eine sogenannte Laserdisk mit einer Speicherkapazität von typisch 500 Gigabyte enthält, die nicht dargestellt ist. Die von der Bildplatte des Bildplattenspieles 10 abrufbaren Informationen werden durch einen Mikroprozessor 12 gesteuert und auf einem Videomonitor 14 dargestellt, an den sich weitere Monitore 16, 18 anschließen können. Diese weiteren Monitore 16, 18 können beispielsweise weiter von einer technischen Anlage entfernt aufgestellt werden als der zur eigentlichen Betriebsüberwachung dienende Monitor 14, der vorzugsweise nahe an der Anlage vorgesehen wird, so daß eine Bedienungsperson diesen Monitor 14 und die Anlage selbst im Auge behalten kann.

Insbesondere für Wartungs- und Instandsetzungsarbeiten kann eine derartige aus Mikroprozessor 12, Bildplattenspieler 10 und Monitor 14 bestehende Einheit auch als transportables Kompaktgerät 20 ausgeführt sein, welches die genannten Funktionen vereinigt.

Es ist ebenfalls möglich, beispielsweise an dem Bedienungsfeld einer technischen Großenlage eine stationäre Anordnung 22 vorzusehen, welche neben den genannten, durch den Mikroprozessor 12, den Bildplattenspieler 10 und den Monitor 14 verkörperten Funktionen, noch weitere Anzeigenelemente für den Betriebszustand der technischen Anlage aufweist.

In der linken Hälfte der Figur 1 sind beispielhaft einige Betriebsabläufe im weiterin Sinne dargestellt, die mit dem erfindungsgemäßen Betriebssteuersystem vorteilhaft verwirklicht werden können.

Da das dem Bildplattenspieler 10 enhaltene Speichermedium sämtliche zur Anlage gehörigen Informationen enthält, kann das Betriebssteuersystem mit Hilfe geeigneter Zusatzinformationen, welche beispielsweise in dem Mikroprozessor 12 gespeichert sein können, auch zur Personalauswahl dienen. Anhand typischer Betriebsabläufe kann nämlich getestet werden, wie sich das Bedienungspersonal in den dargestellten Situationen verhält. Dies gestattet wertvolle Informationen über die Qualifikation oder die Belastbarkeit von Bewerbern, welche und der betreffenden Anlage eingesetzt werden sollen.

Aus dem gleichen Grunde kann die Anlage 10, 12, 14 beziehungsweise eine der Anlagen 20 oder 22 auch zur Personalschulung eingesetzt werden. Hierfür ist es häufig erforderlich, daß weitere Informationen bereit stehen, die bei der Personalauswahl noch nicht erforderlich sind. Diese weiteren Informationen können entweder durch Zusatzglieder zum Mikroprozessor 12 bereitgestellt werden. In diesem Falle sind die Zusatzinformationen also in einem Zusatzglied gespeichert. Es ist aber auch möglich, sämtliche derartigen Informationen durch unterschiedliche Markierungen von Betriebsabläufen und/oder Beriebsparametern bereits auf der Bildspeicherplatte bereitzuhalten und den Zugang zu diesen Informationen durch Zusatzteile, welche an den Mikroprozessor 12 anschließbar sind, wahlweise freizugeben oder zu sperren.

Haupteinsatzgebiete des erfindungsgemäßen Betriebssteuersystems sind aber Anleitung zum Betrieb einer technischen Anlage, insbesondere Inspektion und Wartung, sowie Störfallanalyse und Beseitigung, und derartige Maßnahmen sind in den beiden unteren Feldern der linken Spalte der Figur 1 dargestellt, so etwa Fehlerortung, Erkennen eines Schadens, Reparaturanleitung sowie Kurzanleitungen zu Zusammenbau oder Montage einer derartigen Anlage. Die in diesem Zusammenhang etwa auf einem Video-Monitor 14 dargestellten Betriebsablaufe sind schematisch in der rechten Spalte der Figur 1 geschildert und umfassen insbesondere Bedienung, Instandhaltung, Störungssuche, Instandsetzung, Zusatzinformationen und Montageanweisungen. All diese Betriebsabläufe werden auf dem Videomonitor 14 in Echtzeit als realistische Filme dargestellt und können gegebenenfalls durch Benutzereingriff auf den Mikroprozessor 12 beispielsweise verzögert oder beschleunigt gezeigt werden, also im sogenannten Zeitlupen- oder Zeitrafferverfahren, um das Verständnis zu erleichtern. Auch eine Standbilddarstellung für besonders schwierige Vorgänge ist möglich. Zu den genannten Betriebsabläufen wie Bedienung, Instandhaltung und so weiter zugehörige Betriebsparameter sind exemplarisch anhand von Ersatzteillisten in der rechten Spalte der Figur 1 unten dargestellt.

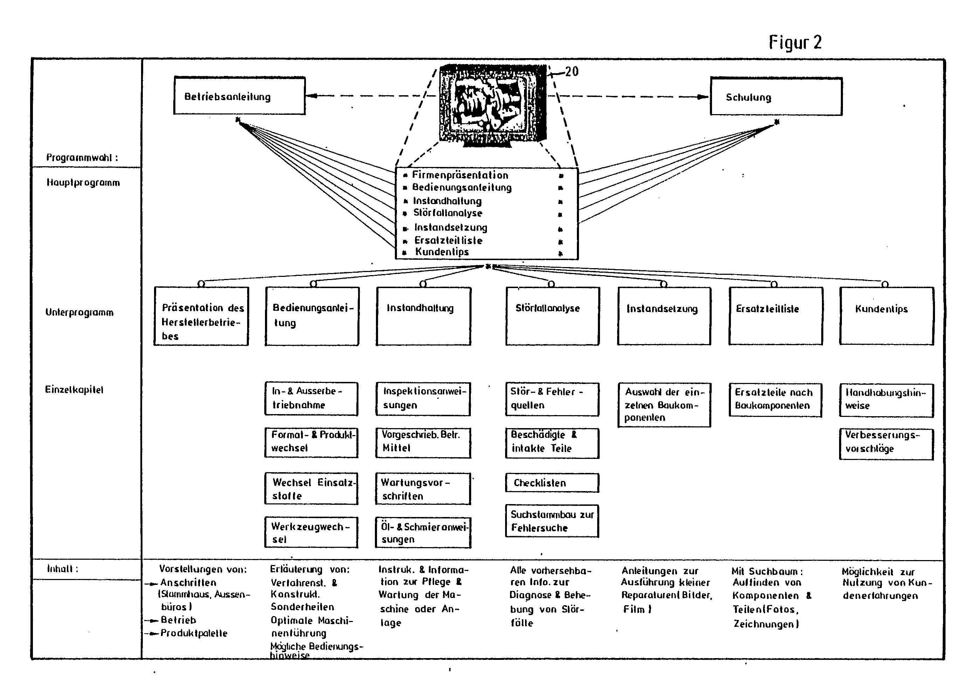

In Figur 2 ist beispielhaft gezeigt, welche Betriebsabläufe, welche durch Blöcke in Figur 2 schematisch dargestellt sind, mit entsprechenden Untergliederungen in dem erfindungsgemäßen Betriebssteuersystem gespeichert und dargestellt werden können. In dem unteren Bereich von Figur 2 sind die zugehörigen Betriebsparameter angegeben.

Das Betriebssteuersystem 20 wie in Figur 1 dargestellt kann so beispielsweise, vergleiche den linken oberen Abschnitt der Figur 2, im Rahmen einer Betriebsanleitung, also der Steuerung des eigentlichen Betriebsvorgangs, eine gespeicherte Bedienungsanleitung aufrufen. Diese kann etwa die In- und Außerbetriebenahme einer technischen Anlage anhand von Filmen und zugehörigen Betriebsparametern erläutern. Sollen beispielsweise bei einer Produktionsanlage unterschiedliche Formate eines bestimmten Produktes oder aber unterschiedliche Formate eines bestimmten Produktes oder aber unterschliedliche Produkte erzeugt werden, so wird im Rahmen der Bedienungsanleitung der Unterabschnitt Format und Produktwechsel aufgerufen und auf dem Videomonitor des Betriebssteuersystems dargestellt. Weitere im Rahmen der Bedienungsanleitung hervorgehobene Unterbereiche der Bedienung betreffen den Wechsel von Einsatzstoffen, beispielsweise unterschiedlicher Kunststoffe für verschiedene Produkte bei einer Maschine zur

Herstellung von Konststofformteilen. Soll in diesem Zusammenhang beispielsweise zunächst die Produktion von Behältern erfolgen, nachfolgend aber die Produktion von Behälterdeckeln, so wird im Rahmen der Bedienungsanleitung dann der Betriebsablaufbereich dargestellt, welcher sich mit dem Werkzeugwechsel befaßt. Die einzelnen zum Werkzeugwechsel erforderlichen Handhabungsschritte können anhand eines Lehrfilmes gezeigt und zur Verdeutlichung durch Stillstandsprojektion einzelner Bildphasen, aber auch durch Zeitlupeneffekte und ähnliches besonders hervorgehoben werden. Hierbei können in jeder Phase des Werkzeugwechsels Zusatzinformationen als Betriebsparameter eingeblendet werden, etwa Instruktionen und Informationen zur Pflege und Wartung. Es kann auch vorgesehen werden, daß in einem Abschnitt des Videomonitors der Betriebsablauf "Werkzeugwechsel" dargestellt wird und auf einem anderen Unterabschnitt ein weiterer Betriebsablauf.

Gleichfalls liegt es im Rahmen der erfindungsgemäßen Vorrichtung und des erfindungsgemäßen Verfahrens, in sogenannter Fenstertechnik beispielsweise in der oberen Hälfte des Bildschirms einen Betriebsablauf in Echtzeit darzustellen und in der unteren Hälfte des Videobildschirms ein sogenanntes Menu abzubilden, welches eine Liste darstellt, anhand derer weitere Zusatzinformationen, entweder eine anderer Bedienungsablauf oder aber Listen oder Listengruppen, also sogenannte Betriebsparameter, abgerufen werden können.

Die Auswahl bestimmter Bereiche oder Abläufe läßt sich auch mittels Antippen des Monitorbildschirms bewerkstelligen, wenn der Bildschirm ein sogenannter "touch-down" Bildschirm ist.

## Patentansprüche

1. Verfahren zum Betrieb einer Analge über eine Einrichtung mit einem eine programmierbare elektronische Schaltungseinheit umfassenden Steuergerät (12), einer Speichervorrichtung (10), in welcher visuelle Informationen und Betriebsparameter gespeichert sind, und einem Darstellungsgerät (14) zur Darstellung der visuellen Information und zugehöriger Betriebsparameter, mit folgenden Schritten:
Speicherung von Betriebsabläufen der Anlage als visuelle information,
Versehen der Betriebsparameter mit Marken, welche ein Zuordnung des/der jeweiligen Betriebsparameter(s) zu dem Betriebsablauf an der Stelle des Betriebsablaufs (der Betriebsabläufe) der Anlage gestatten, an welcher de jeweilige Betriebsparameter auftaucht,
Verknüpfung der Betriebsparameter mit dem Betriebsablauf in dem Steuergerät (12),
Auslesen der Betriebsparameter und des Betriebablaufs von dem Speichermedium,
und wahlweise Darstellung der Betriebsparameter und des Betriebslaufs aufgrund eines Benutzereingriffs auf dem Darstellungsgerät (14).
2. Verfahren nach Anspruch 1, dadurch gekennzeichnet, daß der Betriebsablauf gegenüber der Echtzeit verzögert oder beschleunigt ablaufend darstellbar ist.
3. Verfahren nach Anspruch 1 oder 2, dadurch gekennzeichnet, daß der Betriebsablauf für Betriebsphasen des Ablaufs als Standbild darstellbar ist.
4. Verfahren nach Ansprüche 1 bis 3, dadurch gekennzeichnet, daß den Betriebsparametern eine Hierarchie zugeordnet ist, welche die Reihenfolge und/oder die Art der Darstellung festlegt.
5. Verfahren nach Anspruch 4, dadurch gekennzeichnet, daß die Festlegung änderbar ist.
6. Verfahren nach Ansprüch 1 bis 5, dadurch gekennzeichnet, daß Teilen von Betriebsabläufen und/oder Betriebsparametern zusätliche Markierungen zuweisbar sind, die das Auslesen der derart markierten Betriebsabläufe und/oder Betriebsparameter verhindern.
7. Verfahren nach Anspruch 6, dadurch gekennzeichnet, daß die zusätzlichen Markierungen von privilegierten Benutzern übersteuerbar sind.

## Revendications

1. Procédé d'exploitation d'une installation, par l'intermédiaire équipement comprenant un appareil de commande (12), contenant une unité de commande électronique programmable, un dispositif à mémoire (10) dans lequel sont stockés des informations visuelles et des paramètres d'exploitation, ainsi qu'un appareil de représentation (14) pour la représentation des informations visuelles et des paramètres d'exploitation correspondants, comprenant les étapes suivantes:
mémorisation des procédures de l'installation sous forme d'information visuelles,
attribution de marques aux paramètres d'exploitation, lesquelles permettent une affectation du/ des paramètre(s) d'exploitation respectif)s) à la procédure, sur le lieu de la (des) procédures(s) de l'installation où se manifeste le parametre d'exploitation correspondant,
création de liens entre les paramètres d'exploitation et la procédure, dans l'appareil de commande (12),
extraction des paramètres d'exploitation et de la procédure, de la mémoire,
et, en option, représentation des paramètres d'exploitation et de la procédure, par intervention de l'utilisateur sur l'appareil de représentation (14).
2. Procédé selon la revendication 1, caractérisé en ce que la procédure peut être représentée avec un déroulement au ralenti ou en accéléré par rapport au temps réel.
3. Procédé selon la revendication 1 ou 2, caractérisé en ce que la procédure peut être représentée sous la forme d'une image arrêtée, pour les phases de la procédure.
4. Procédé selon l'une quelconque des revendications 1 à 3, caractérisé en ce qu'on attribue aux paramètres d'exploitation, une hiérarchie qui définit la succession et/ou le mode de représentation.
5. Procédé selon la revendication 4, caractérisé en ce que la définition est variable.

6. Procédé selon l'une quelconque des revendications 1 à 5, caractérisé en ce qu'on peut attribuer, à des parties des procédures et/ou à des paramètres d'exploitation, des marques supplémentaires qui empêchent l'extraction des procédures et/ou des paramètres d'exploitation ainsi marqués.

7. Procédé selon la revendication 6, caractérisé en ce que les marques supplementaires peuvent être supprimées par des utilisateurs privilégiés.

**Claims**

1. A method for operating a plant with means comprising a control means (12) having a programmable electronic circuit unit, a storage means (10) in which visual information and operating parameters are stored, and a display device (14) for displaying said visual information and associated operation parameters, comprising the following steps:

storing of operation procedures of said plant as visual information,

marking said operation parameters with markers which allow an assignment of the respective operation parameter or parameters to said operation procedure at that part of said operating procedure (said operating procedures) of said plant, where said respective operation parameter appears,

combining said operation parameters with said operation procedure in said control means (12),

read-out of said operation parameters and said operations procedure from said storage medium,

and selectively displaying said operation parameters and said operation procedure on said display device (14) in response to a user intervention.

2. The method as claimed in claim 1, wherein said operation procedure is displayed in delayed or accelerated fashion with respect to real time.

3. The method as claimed in claim 1, wherein said operation procedure may be displayed as a still picture for operation phases of said procedure.

4. The method as claimed in claim 1, wherein a hierarchy is assigned to said operation parameters, said hierarchy determining the sequence and/or the manner of display.

5. The method as claimed in claim 4, wherein said determination is changeable.

6. The method as claimed in claim 1, wherein additional markers may be assigned to sections of operational procedures and/or operation parameters, said additional markers preventing the read-out of said operation procedures and/or operation parameters which have been marked in such manner.

7. The method as claimed in claim 1, wherein said additional markers may be overrridden by privileged users.

Figur 1

**Maschinenseite**

Operating 'Visuals' :

- Bedienung
- Instandhaltung
- Störungssuche
- Instandsetzung
- Zusatzinformationen
- Montageanweisungen

Dokumentation :

- Ersatzteillisten

**Bedienerseite**

Voranalysen: Ausbildungsstand, Techn. Erfahrungen, Eigenheiten etc.

Personalauswahl

Personalschulung
Aktualisierung des Wissens

Betriebsanleitungen
Inspektion &
Wartung

Fehlerortung
Erkennen des Schadens
Reparaturanleitung
Kurzanleitung zu
Zusammenbau/Montage

Konfigurationen:

stationär

Mikroprozessor  12

10

22

Weitere Monitore

14

16

18

mobil

20

Figur 2

EP 0 300 998 B1

Betriebsanleitung ← — — — [20] — — — → Schulung

**Menü:**
- Firmenpräsentation
- Bedienungsanleitung
- Instandhaltung
- Störfallanalyse
- Instandsetzung
- Ersatzteilliste
- Kundentips

| | | | | | | | |
|---|---|---|---|---|---|---|---|
| **Programmwahl:** | | | | | | | |
| **Hauptprogramm** | Firmenpräsentation · Bedienungsanleitung · Instandhaltung · Störfallanalyse · Instandsetzung · Ersatzteilliste · Kundentips | | | | | | |
| **Unterprogramm** | Präsentation des Herstellerbetriebes | Bedienungsanleitung | Instandhaltung | Störfallanalyse | Instandsetzung | Ersatzteilliste | Kundentips |
| **Einzelkapitel** | | In-& Ausserbetriebnahme | Inspektionsanweisungen | Stör- & Fehler - quellen | Auswahl der einzelnen Baukomponenten | Ersatzteile nach Baukomponenten | Handhabungshinweise |
| | | Formal- & Produktwechsel | Vorgeschrieb. Betr. Mittel | Beschädigte & intakte Teile | | | Verbesserungsvorschläge |
| | | Wechsel Einsatzstoffe | Wartungsvorschriften | Checklisten | | | |
| | | Werkzeugwechsel | Öl- & Schmieranweisungen | Suchstammbau zur Fehlersuche | | | |
| **Inhalt:** | Vorstellungen von: → Anschriften (Stammhaus, Aussenbüros) → Betrieb → Produktpalette | Erläuterung von: Verfahrenst. & Konstrukt. Sonderheiten Optimale Maschinenführung Mögliche Bedienungshinweise | Instruk. & Information zur Pflege & Wartung der Maschine oder Anlage | Alle vorhersehbaren Info. zur Diagnose & Behebung von Störfälle | Anleitungen zur Ausführung kleiner Reparaturen( Bilder, Film ) | Mit Suchbaum: Auffinden von Komponenten & Teilen(Fotos, Zeichnungen) | Möglichkeit zur Nutzung von Kundenerfahrungen |